# EUROPÄISCHE PATENTSCHRIFT

(11) **EP 3 744 996 B1**
(45) Veröffentlichungstag und Bekanntmachung des Hinweises auf die Patenterteilung: **02.02.2022**
(21) Anmeldenummer: 19213937.6
(22) Anmeldetag: 05.12.2019
(51) Int. Cl.: F16F 1/387, F16F 1/38, F16F 13/14

(54) **ELASTISCHES LAGER**
ELASTIC BEARING
PALIER ÉLASTIQUE

(30) Priorität: 11.04.2019 DE 102019109608
(43) Veröffentlichungstag der Anmeldung: 02.12.2020
(73) Patentinhaber: Vibracoustic SE, 64293 Darmstadt (DE)
(72) Erfinder: DR. WERNER, Philipp, 21339 Lüneburg (DE); KARDOES, Hilrich, 21423 Winsen (DE)
(74) Vertreter: Patentanwälte Olbricht Buchhold Keulertz

(56) Entgegenhaltungen:
- DE-B4-102007 016 399
- JP-A- H0 960 675
- JP-A- H01 126 447

## Beschreibung

Die vorliegende Erfindung betrifft eine elastisches Lager zur Aufnahme statischer und dynamischer Lasten eines Fahrzeugteils, aufweisend ein Innenteil, an dem das Fahrzeugteil festlegbar ist, ein Außenteil, das in ein Aufnahmeauge einsetzbar ist, und wenigstens ein Elastomerlager, das das Innenteil und das Außenteil elastisch miteinander verbindet.

Ein elastisches Lager der eingangs genannten Art wird dazu verwendet, um ein Fahrzeugteil an einer Fahrzeugkarosserie zu lagern. Das Lager nimmt einerseits das Gewicht des Fahrzeugteils auf, also dessen statische Last, und dämpft und/oder tilgt die von dem Fahrzeugteil erzeugten Schwingungen, also dessen dynamische Lasten, um so den Fahrkomfort zu erhöhen. Ein derartiges Lager wird beispielsweise als Hilfsrahmenlager, Aggregatelager, wie Motor- oder Kühlerlager, oder auch als Fahrerhauslager in Personen- oder Lastkraftwagen eingesetzt. Infolge der statischen Last federt das Lager in Axialrichtung ein, indem das Elastomerlager komprimiert wird. In diesem Zustand spricht man von der sogenannten Konstruktionslage oder kurz "K0-Lage" des Lagers.

Bei modernen Fahrzeugen nimmt das Gewicht aufgrund der Elektrifizierung des Antriebsstrangs, wie beispielsweise des Einsatzes von Batterien, zu, und die gleichzeitige Forderung von niedrigen Steifigkeiten in der KO-Lage für hohen Fahrkomfort führt zu großen Lagerwegen in Belastungsrichtung. Bekannte Keillager, deren Elastomerlager keilförmig und symmetrisch aufgebaute Elastomerpolster besitzen, können solche Lasten aufnehmen, sie sind jedoch aufgrund der zunehmenden Druckspannungen in den Elastomerpolstern stark progressiv. Zum einen ist solch ein progressives Verhalten häufig unerwünscht, zum anderen setzt ein progressives Verhalten voraus, dass die unbelastete Anfangssteifigkeit noch geringer ist, damit im Zielpunkt die richtige Steifigkeit erreicht wird. Hieraus resultieren im Vergleich zu Lagern mit gleichbleibender, also nicht progressiver Steifigkeit noch längere Einfederwege und in Folge noch höhere Dehnungen, bis die K0-Lage erreicht wird.

Werden hingegen elastomere Schubpolster in Axialrichtung ausgerichtet, sind diese zwar in axialer Richtung wenig progressiv, jedoch verhältnismäßig steif, wenn sie radial belastet werden, da in diesem Fall Druckspannungen im Elastomerpolster entstehen. Aus Komfortgründen sind jedoch häufig neben der zuvor angesprochenen linearen Axialsteifigkeit auch geringe Radialsteifigkeiten gefordert.

Zur Umgehung dieser Nachteile geht aus DE 10 2007 016 399 B4 ein biaxial dämpfendes Hydrolager hervor, dessen axiale und radiale Dämpfungseigenschaften weitgehend voneinander unabhängig festgelegt werden können. Hierzu weist das Hydrolager einen Tragkörper auf, welcher aus einem Innenkern, einer radial zum Innenkern beabstandeten Außenwand eines Gehäuseoberteils und einer mit dem Innenkern und der Außenwand durch Vulkanisation verbundenen, elastomeren Feder besteht, wobei die Feder durch ein Zwischenstück in zwei Abschnitte unterteilt ist. Das Zwischenstück ist so geformt, dass bei einer axialen Einfederung des Kernes in Radialrichtung sowohl zwischen dem Zwischenstück und dem Innenkern als auch zwischen dem Zwischenstück und der Außenwand jeweils Druckspannungen in der elastomeren Feder auftreten. Dadurch ist die radiale Kennung unter Lasten hoch. Zudem ist das Lager in Axialrichtung noch leicht progressiv, da die innere, kernnahe Elastomerspur hohe Druckanteile und die äußere Elastomerspur aufgrund der Anstellung, hier >15°, geringe Druckanteile aufweist. Durch diese Progression ist die axiale Grundkennung im unbelasteten Punkt weicher als unter axialer Einfederung durch die Vorlast. Bei gegebener axialer Steifigkeit in KO-Lage federt das progressive Lager daher stärker ein als ein lineares Lager, was zu höheren Dehnungen und damit einer potentiell niedrigen Lebensdauer führt.

Eine denkbare alternative Ausführungsform für ein Lager mit linearer Axialsteifigkeit ist ein in Axialrichtung so lang ausgeführtes Elastomerpolster ohne Zwischenelement, das in der KO-Lage zwischen einem unteren kernseitigen Anbindungspunkt und oberen außenseitigem Anbindungspunkt noch zu keiner beziehungsweise nur zu einer geringen Überdeckung in Radialrichtung kommt. Ein solches Elastomerpolster ist in Axialrichtung lang und erforder viel axialen Bauraum. Gleichzeitig ist ein langes axiales Schubpolster aber auch sehr blähweich. Das lange axiale Schubpolster kann, sofern es in einem hydraulisch dämpfenden Lager als Membran dient, einem Innendruck nicht ausreichend standhalten, sondern baucht leicht nach außen aus. Dadurch entsteht nicht nur eine von der dynamischen Belastung stark abhängige axiale Steifigkeit, es ist zudem sehr schwierig, in solch einem Lager eine ausreichende Pumpleistung für eine hohe Dämpfung zu integrieren.

Wird das Lager hingegen in Axialrichtung verhältnismäßig kurz ausgeführt, so kommt es zwischen dem unteren kernseitigen Anbindungspunkt und dem oberen außenseitigen Anbindungspunkt bei voller Einfederung in der KO-Lage zu einer Überdeckung, aus welcher hohe radiale Steifigkeiten durch Druckanteile bei radialer Auslenkung resultieren. Als positive Eigenschaft weist ein solches kurzes axiales Schubpolster eine hohe Blähsteifigkeit auf. Ein kurzes axiales Schubpolster neigt somit nicht zum Ausbauchen und kann somit eine hohe Pumpleistung beziehungsweise Dämpfung in einem hydraulisch dämpfenden Lager implementieren.

Der Erfindung liegt die Aufgabe zugrunde, ein elastisches Lager zu schaffen, das nach axialer Einfederung ein niedrige radiale Kennung und gleichzeitig einen linearen axialen Kennungsverlauf und zudem eine hohe Blähsteifigkeit aufweist.

Diese Aufgabe wird mit den Merkmalen des Anspruchs 1 gelöst.

Vorteilhafte Ausgestaltungen des elastischen Lagers sind Gegenstand der abhängigen Ansprüche.

Unter X-Richtung wird im Folgenden die Richtung verstanden, in die sich ein Kraftfahrzeug bewegt. Unter Y-Richtung wird im Folgenden eine Richtung quer zur Fahrtrichtung verstanden, und unter Z-Richtung wird im Folgenden die Richtung in Höhe des Fahrzeugs verstanden, welche die Längsachse beziehungsweise die Axialrichtung des Lagers darstellt. Unter Radialrichtung wird im Folgenden die X-Richtung und Y-Richtung verstanden.

Unter schubweich wird im Folgenden die Eigenschaft eines Körpers verstanden, der leicht geschert werden kann und dadurch eine geringe Schubsteifigkeit aufweist.

Gemäß eines Aspektes wird ein elastisches Lager zur Aufnahme statischer und dynamischer Lasten eines Fahrzeugteils vorgeschlagen, das ein Innenteil, an dem das Fahrzeugteil festlegbar ist, ein Außenteil, das in ein Aufnahmeauge einsetzbar ist oder an einer Fahrzeugstruktur festlegbar, und wenigstens ein Elastomerlager aufweist, das das Innenteil und das Außenteil elastisch miteinander verbindet, wobei das Elastomerlager bei Aufnahme einer in Richtung der Längsachse des Lagers wirkenden statischen Last von einer ersten Position in eine zweite Position überführbar ist, wobei das Elastomerlager einen ersten Elastomerkörper, einen zweiten Elastomerkörper und ein Zwischenelement aufweist, das zwischen den beiden Elastomerkörpern angeordnet ist und an das die Elastomerkörper stoffschlüssig angebunden sind, wobei das Zwischenstück wenigstens eine erste Anbindungsfläche für den ersten Elastomerkörper und wenigstens eine zweite Anbindungsfläche für den zweiten Elastomerkörper aufweist, wobei die erste Anbindungsfläche derart zur Längsachse des Elastomerlagers ausgerichtet ist, dass der erste Elastomerkörper in der zweiten Position zur Aufnahme der Lasten in Z-Richtung schubweich, in X-Richtung und/oder in Y-Richtung steif ausgebildet ist, und wobei die zweite Anbindungsfläche derart zur Längsachse des Elastomerlagers ausgerichtet ist, dass der zweite Elastomerkörper in der zweiten Position zur Aufnahme der Lasten in X-Richtung und/oder in Y-Richtung schubweich und in Z-Richtung steif ausgebildet ist.

Da das Zwischenelement das Elastomerlager in zwei Elastomerkörper aufteilt, nämlich, einen in Z-Richtung schubweich wirkenden Elastomerkörper, der auch als Axiallager bezeichnet werden kann, und einen in X-Richtung und/oder in Y-Richtung schubweich wirkenden Elastomerkörper, der auch als Radiallager bezeichnet werden kann, kann das elastische Lager die Radialrichtung von der Axialrichtung entkoppeln. Das Axiallager weist in KO-Lage ein in Axialrichtung ausgerichtetes Schubpolster auf, welches unabhängig vom Einfederzustand eine verhältnismäßig wenig progressive Kennlinie aufweist. Das Radiallager ist radial sehr schubweich und gleichzeitig aber axial sehr steif. Dadurch kann das Radiallager die Axiallasten auf das Axiallager übertragen, ohne selbst große axiale Auslenkungen zu erfahren. Durch das Einfügen des Zwischenelementes kann somit eine radial weiche Lagerung mit einer schubweichen, linearen Lagerung in Axialrichtung für hohe Vorlasten kombiniert werden. Zudem kann das axial weiche Axiallagerpaket auch als Arbeitsmembran in einem hydraulisch dämpfenden Lager, insbesondere in einem axial dämpfenden Hydrolager verwendet werden. Darüber hinaus erhöht das Zwischenelement die Blähsteifigkeit des Elastomerpolsters auch unter hohen axialen Einfederwegen und ermöglicht damit eine große Pumpleistung.

Durch die Ausgestaltung des Zwischenelements und der beidseitig angeordneten Elastomerkörper ist eine besonders modular einstellbare Kennungsspreizung möglich, nämlich eine über einen weiten Lastbereich nahezu lineare, weiche Kennung in Z-Richtung, welche besonders hohe Lasten und damit Auslenkungen in Z-Richtungen erträgt, in Kombination mit einer geringen radialen Steifigkeit in Y- und in X-Richtung. Dies wird insbesondere durch die Ausrichtung beziehungsweise den Verlauf der Anbindungsflächen zur Längsachse des Lagers erzielt. Durch die Bereitstellung der zu der Längsachse des Lagers verlaufenden Anbindungsflächen an dem Zwischenelement können zwei Lager in Reihe geschaltet werden, wobei jeweils die geringste in Reihe geschaltete Steifigkeit die Gesamtsteifigkeit dominiert. So kann eine sehr hohe axiale Steifigkeit mit einem axial weichen Lager linearer Kennung über einen hohen Lastbereich zu einem besonders lebensdauerfesten Lager mit linearem Lagerverhalten kombiniert werden, während eine besonders weiche radiale Steifigkeit gepaart mit einer hohen radialen Steifigkeit zu einer geringen radialen Gesamtsteifigkeit führt. Vorteilhaft ist das zwischen dem radial weichen Radiallager sowie dem Axiallager angeordnete Zwischenelement lastübertragend. Hierzu kann das Zwischenstück aus Metall oder Kunststoff oder einem Hybridwerkstoff sein. Unter Hybridwerkstoff wird vorliegend ein Verbundwerkstoff verstanden, der eine Kombination aus metallischen, keramischen und/oder polymeren Werkstoffen ist, wobei der Verbundwerkstoff vorzugsweise als Schichtverbund aus wenigstens zwei dieser Werkstoffe gebildet ist.

Das elastische Lager kann überall dort eingesetzt werden, wo hohe axiale Lasten auftreten und gleichzeitig ein möglichst linearer Steifigkeitsverlauf, wie auch eine geringe radiale Steifigkeit unter Last für hohen Fahrkomfort gefordert werden. So kann das elastische Lager beispielsweise als Hinterachsträgerlager oder Body Mount, Aggregatelager, wie Motorlager oder Kühlerlager oder als Fahrerhauslager in Personen- oder Lastkraftwagen eingesetzt werden.

Vorteilhaft weist der zweite Elastomerkörper in der zweiten Position eine wenigstens dreimal so hohe, bevorzugt wenigstens fünfmal so hohe, Steifigkeit in Z-Richtung auf, wie der erste Elastomerkörper in der zweiten Position, wobei der erste Elastomerkörper in der zweiten Position eine wenigstens dreimal so hohe Steifigkeit in X-Richtung und/oder Y-Richtung aufweist, wie der zweite Elastomerkörper in der zweiten Position.

In einer vorteilhaften Ausgestaltung sind die Elastomerkörper auf den gegenüberliegenden Seiten ihrer Anbindungsflächen am Zwischenelement ebenfalls haftend festgelegt. In einer vorteilhaften Ausgestaltung sind die Anbindungsflächen am Innenteil und/oder am Außenteil im Wesentlichen parallel zu den Anbindungsflächen am Zwischenelement.

In einer vorteilhaften Ausgestaltung sind das Innenteil und/oder das Außenteil als Rohre oder Hülsen ausgebildet. Weiterhin vorteilhaft sind das Innenteil und/oder das Außenteil aus Metall oder Kunststoff oder einem Hybridwerkstoff. Das Innenteil kann auch als Kern, Innenrohr oder Innenhülse bezeichnet werden. Das Außenteil kann auch als Außenrohr oder Außenhülse bezeichnet werden. In einer vorteilhaften Ausgestaltung weist das Innenteil eine Durchgangsöffnung auf, mittels derer das elastische Lager über einen Bolzen mit dem Fahrzeugteil verbindbar ist. In einer vorteilhaften Ausgestaltung wird das Lager über das Außenteil in ein Aufnahmeauge eingepresst. In einer vorteilhaften Ausgestaltung weist das Innenteil einen in Richtung einer Längsachse des Lagers verlaufenden Axialabschnitt und einen senkrecht dazu verlaufenden Radialabschnitt auf. Vorteilhat dient der Axialabschnitt und/oder der Radialabschnitt als Anbindungsfläche des zweiten Elastomerkörpers an dem Innenteil. In einer vorteilhaften Ausgestaltung ist der Radialabschnitt im Wesentlichen parallel zur zweiten Anbindungsfläche des Zwischenelementes. In einer vorteilhaften Ausgestaltung weist das Außenteil einen in Richtung der Längsachse des Lagers verlaufenden Hülsenabschnitt und einen quer zur Längsachse des Lagers verlaufenden Bundabschnitt auf. Vorteilhaft dient der Hülsenabschnitt und/oder der Bundabschnitt als Anbindungsfläche für den ersten Elastomerkörper. In einer vorteilhaften Ausgestaltung ist der Hülsenabschnitt im Wesentlichen parallel zur ersten Anbindungsfläche des Zwischenelementes.

In einer vorteilhaften Ausgestaltung ist die erste Anbindungsfläche parallel zur Längsachse des Lagers oder in einem Winkel von maximal +-15° zur Längsachse des Lagers ausgerichtet. Dadurch ist der erste Elastomerkörper, der dem Axiallager entspricht, in der k0-Lage im Wesentlichen senkrecht zur Längsachse des Lagers angestellt, so dass die axiale Kennlinie des Axiallagers in einem großen Lastbereich, insbesondere aber noch in der KO-Lage, weitgehend linear ist. Typische Vorlasten können dabei bis zu 5 kN betragen. Typische Forderungen an die axialen Steifigkeiten in der KO-Lage liegen zwischen 400 und 800 N/m, wobei typische Einfederungen unter K0-Last zwischen 8 mm und 12 mm betragen, zu denen noch die Wege aufgrund der dynamischen Lasten hinzukommen. Vorteilhaft weist das Axiallager im eingefederten Zustand eine große radiale Überdeckung auf, so dass unter einer Last in Radialrichtung große Druckspannungen in diesem Lager auftreten. Dadurch ist das Axiallager in Radialrichtung sehr steif.

In einer vorteilhaften Ausgestaltung ist die zweite Anbindungsfläche senkrecht zur Längsachse des Lagers oder in einem Winkel von maximal +-10° zu einer senkrecht auf der Längsachse stehenden Achse ausgerichtet. Da die angebundene Fläche des zweiten Elastomerkörpers, das dem Radiallager entspricht, im Wesentlichen senkrecht zur Längsachse des Lagers verläuft, wird das Radiallager bei radialen Lasten primär auf Schub belastet und ist somit radial weich. Dadurch, dass sich die radiale Gesamtsteifigkeit des elastischen Lagers aus der Reihenschaltung des Radiallagers und des Axiallagers ergibt, bestimmt die niedrigste Steifigkeit dessen Gesamtsteifigkeit. Somit ist das Radiallager in der Lage, die radiale Gesamtsteifigkeit herabzusetzen. In einer vorteilhaften Ausgestaltung weist das Radiallager eine niedrige Bauhöhe in Längsrichtung und eine große Ausdehnung in Axialrichtung und damit eine große im Wesentlichen senkrecht zur Längsrichtung des Lagers stehende Anbindungsfläche auf.

In einer vorteilhaften Ausgestaltung weist die erste Anbindungsfläche und/oder die zweite Anbindungsfläche wenigstens eine Vertiefung und/oder wenigstens eine Erhebung auf. Über die wenigstens eine Vertiefung und/oder eine Erhebung können die Steifigkeitsverhältnisse des ersten Elastomerkörpers und/oder des zweiten Elastomerkörpers einststellt werden. Darüber hinaus kann die erste Anbindungsfläche und/oder die zweite Anbindungsfläche mehrere Vertiefungen und/oder Erhebungen aufweisen.

In einer vorteilhaften Ausgestaltung weist der zweite Elastomerkörper in Richtung der Längsachse eine Höhe und quer zur Längsachse eine Breite auf, wobei das Verhältnis von Höhe zu Breite mindestens 1 zu 3 beträgt. Dadurch weist der als Radiallager wirkende zweite Elastomerkörper eine flache Bauform auf, so dass es in Axialrichtung sehr steif ist und hohe Lasten übertragen kann, während es in der im Wesentlichen auf Schub belasteten Radialrichtung folglich eine sehr geringe Radialsteifigkeit aufweist.

In einer vorteilhaften Ausgestaltung weist der erste Elastomerkörper in Richtung der Längsachse eine Höhe und quer zu der Längsachse eine Breite auf, wobei in der zweiten Position die Höhe größer oder gleich der Breite ist. Dadurch kann der als Axiallager wirkende erste Elastomerkörper hohe axiale Vorlasten bei gleichzeitig geringer, im Wesentlichen linearer Kennung aufnehmen.

In einer vorteilhaften Ausgestaltung ist der zweite Elastomerkörper zwischen zwei weitgehend parallelen Anbindungsflächen, senkrecht zur Z-Richtung des Lagers haftend am Zwischenstück und der gegenüberliegenden Anbindungsfläche angebunden. Da das Zwischenstück in Z-Richtung eine Ausdehnung hat, ergibt sich zwischen Zwischenstück und dieser gegenüberliegenden Anbindungsfläche im Bereich dieser Z-Ausdehnung ein ringförmiger Spalt, der in der Regel nicht mit Elastomer gefüllt ist. Daher weist der zweite Elastomerkörper die Form eines flachen Ringes auf, was zu einer in X- und Y-Richtung schubweichen Steifigkeit führt.

In einer vorteilhaften Ausgestaltung ist der ringförmige, in Z-Richtung ausgebildete Spalt teilweise mit Elastomer ausgefüllt. Dieses kann als Fortsetzung des zweiten Elastomerkörpers in räumlicher Z-Richtung verstanden werden. Geschieht dieses in dem Ringspalt partiell in X- oder Y-Richtung, so lässt sich einfach eine Kennungsspreizung zwischen der X- und Y-Richtung einstellen.

In einer vorteilhaften Ausgestaltung weist der erste Elastomerkörper und/oder der zweite Elastomerkörper wenigstens ein Elastomerpolster aufweist, das in X- Richtung und/oder Y-Richtung wirkt. Mittels des Elastomerpolsters kann eine Kennungsspreizung zwischen der X- und Y-Richtung eingestellt werden. Bevorzugt weist der zweite Elastomerkörper das Elastomerpolster auf. Das Elastomerpolster kann in einem ringförmigen Spalt hineinragen, der zwischen dem Zwischenstück und der dem Zwischenstück gegenüberliegenden Anbindungsfläche des zweiten Elastomerkörpers ausgebildet ist.

In einer vorteilhaften Ausgestaltung ist das Zwischenelement im Querschnitt rechteckförmig oder T-förmig. Ein im Querschnitt rechteckförmiges Zwischenelement ist kostengünstig herstellbar.

In einer vorteilhaften Ausgestaltung ist eine erste Membran und eine zweite Membran vorgesehen, wobei das Elastomerlager und die erste Membran eine erste Fluidkammer und die erste Membran und die zweite Membran eine zweite Fluidkammer begrenzen, und wobei die Fluidkammern mit einem Fluid gefüllt und über einen Dämpfungskanal fluidleitend miteinander verbunden sind. Dadurch bildet das elastische Lager ein hydraulisch dämpfendes Lager, das auch als Hydrolager bezeichnet werden kann. Bevorzugt ist das Hydrolager ein axial dämpfendes Hydrolager. Das Zwischenelement erhöht die Blähsteifigkeit des Elastomerlagers auch unter hohen Einfederwegen in Axialrichtung und ermöglicht damit eine große Pumpleistung. Da das Axiallager in Axialrichtung länger als in Radialrichtung dick ist, ist dessen Blähsteifigkeit hoch. Bedingt dadurch weist das Elastomerlager eine hohe Pump- und damit Dämpfleistung auf, so dass das Elastomerlager als Pumpenmembran eingesetzt werden kann. Dabei verbinden die beiden Elastomerkörper zusammen mit dem Zwischenelement das Innenteil und das Außenteil fluiddichtend, so dass sie zur Abdichtung der Fluidkammern beitragen. Da das Radiallager eine geringere mittlere Bauhöhe, aber große mittlere radiale Ausdehnung besitzt, ist auch das Radiallager blähsteif. Somit ist das Elastomerlager blähsteif und sehr gut geeignet, um in einem axial dämpfenden Hydrolager als Pumpenmembran zu fungieren.

In einer vorteilhaften Ausgestaltung ist das Zwischenelement ringförmig zwischen dem ersten und dem zweiten Elastomerkörper eingebettet. Dadurch ist die Blähsteifigkeit und damit die potentielle Dämpfer- und/oder Tilgerleistung des Lagers höher, als wenn das Zwischenelement nicht als geschlossener Ring ausgeführt wird, da ein Ausbauchen der als Elastomermembran fungierenden Elastomerkörper reduziert wird.

In einer vorteilhaften Ausgestaltung weist die erste Membran einen ersten Schenkel, einen zweiten Schenkel und eine die beiden Schenkel miteinander verbindende Basis auf, wobei eine mittlere Dicke eines der Schenkel mindestens doppelt so dick wie die des anderen Schenkels ist. Da die mittlere Dicke eines Schenkels mindestens doppelt so dick wie die des anderen Schenkels ist, kann die Membran große Bewegungen in Axialrichtung und/oder in Radialrichtung durchführen. Zudem ist die Membran unempfindlich gegenüber einem Aufblähen aufgrund hoher Differenzdrücke zwischen den beiden Fluidkammern. Dies führt in den meisten Betriebszuständen zu einer hohen Blähsteifigkeit der Membran, was in einem großen Pumpvolumen und somit einer verbesserten Dämpfungseffektivität resultiert. Zudem gewährleistet diese Ausgestaltung, dass die Membran bei Differenzdrücken zwischen den Fluidkammern sehr steif ist. Unter der mittleren Dicke wird der Durchschnittswert der Dicke eines Schenkels über seine gesamte Länge, also von der Basis bis zu seinem freien Ende, verstanden. Vorteilhaft ist die Basis U-förmig mit einer einheitlichen Dicke ausgebildet, wobei die Schenkel von der U-förmigen Basis abragen.

Der Querschnitt des im Mittel mindestens doppelt so dicken Schenkels kann sich ausgehend von der Basis erweitern. Der mindestens doppelt so dicke Schenkel kann sich stetig oder unstetig erweitern. Der im Mittel mindestens doppelt so dicke Schenkel kann beispielsweise ausgehend von der Basis trichterförmig zunehmen. Dadurch ist der mindestens doppelt so dicke Schenkel im Vergleich zu dem anderen Schenkel sehr blähsteif, gleichzeitig weist er aber bei großen translatorischen Auslenkungen eine harmonische Biegelinie auf, die zu einer geringen Dehnbeanspruchung und damit einer hohen Lebensdauer der Membran führt.

In einer vorteilhaften Ausgestaltung biegt sich der im Mittel doppelt so dicke Schenkel bei einer Druckdifferenz, bei der die als Arbeitskammer ausgebildete Fluidkammer einen höheren Druck als die als Ausgleichskammer ausgebildete Fluidkammer aufweist, in Richtung des Kerns, wobei sich die die beiden Schenkel miteinander verbindende Basis an den Kern anlegt. In dieser Stellung ist die Membran besonders blähsteif, so dass eine hohe Pumpleistung und damit verbunden eine hohe Dämpfung erzielt werden kann.

In einer vorteilhaften Ausgestaltung weist die erste Membran eine Innenhülse, die mit dem Innenteil verbindbar ist, und eine Außenhülse, die mit dem Außenteil verbindbar ist, auf. In die Außenhülse kann ein Kanal eingebracht sein. Weiterhin vorteilhaft ist die erste Membran an die Innenhülse und die Außenhülse stoffschlüssig angebunden, insbesondere ist der im Mittel mindestens doppelt so dicke Schenkel an die Außenhülse und der andere Schenkel ist an die Innenhülse angebunden. Die Außenhülse kann aus einem lasertransparenten Kunststoff ausgeführt sein, so dass sie mittels Laserdurchstrahlschweißen mit dem Außenteil verschweißt werden kann.

In einer vorteilhaften Ausgestaltung ist die zweite Membran eine Ausgleichsmembran. In einer vorteilhaften Ausgestaltung weist die zweite Membran eine Innenhülse, die mit dem Innenteil verbindbar ist, und eine Außenhülse, die mit dem Außenteil verbindbar ist, auf. Weiterhin vorteilhaft ist die zweite Membran stoffschlüssig an die Innenhülse und die Außenhülse angebunden.

In einer vorteilhaften Ausgestaltung ist ein zweites Elastomerlager vorgesehen, das in X-Richtung und/oder Y-Richtung wirkt. Das zweite Elastomerlager wirkt somit als zusätzliches Radiallager. Vorteilhaft weist das zweite Elastomerlager eine hohe Kennungsspreizung auf. In einer vorteilhaften Ausgestaltung sind die radialen Steifigkeiten des Elastomerlagers mit Zwischenelement und die des zusätzlichen zweiten Elastomerlagers parallel geschaltet. Dadurch bestimmt die radiale Steifigkeit des als Axiallager wirkenden ersten Elastomerkörpers nicht länger die Radialsteifigkeit der Gesamtkonstruktion. Das als Radiallager wirkende zweite Elastomerlager kann eine Innenhülse, die mit dem Innenteil verbindbar ist, eine Außenhülse, die mit dem Außenteil verbindbar ist, und ein Elastomerelement aufweisen. In das Elastomerelement des zweiten Elastomerlagers können Zwischenbleche eingebracht sein. Die Außenhülse kann aus einem laserabsorbierenden Kunststoff ausgeführt sein, so dass sie mittels Laserdurchstrahlschweißen mit dem lasertransparenten Außenteil verschweißt werden kann.

In einer vorteilhaften Ausgestaltung ist in das Lager ein hydraulisch dämpfendes Lager integriert. Bevorzugt ist das hydraulisch dämpfende Lager als radial dämpfendes Hydrolager ausgebildet. In einer vorteilhaften Ausgestaltung weist das Hydrolager eine Innenhülse, die mit dem Innenteil verbindbar sind, ein Elastomerelement und einen Käfig auf, der mit dem Außenteil verbindbar ist. Statt eines Käfigs können auch ringförmige Strukturen vorgesehen sein, die mit dem Außenteil verbindbar sind. Das Elastomerelement kann zwei Elastomermembranen aufweisen, die mit einem Fluid gefüllte Fluidkammern begrenzen. Die Fluidkammern sind über einen Kanal miteinander verbunden. Der Kanal kann ein separates Teil sein. Vorteilhaft ist das Elastomerelement stoffschlüssig an die Innenhülse und die beiden hülsenförmigen Befestigungselemente angebunden.

In einer vorteilhaften Ausgestaltung ist das hydraulisch dämpfende Lager ein axialdämpfendes Hydrolager.

In einer vorteilhaften Ausgestaltung weist das Lager einen Aufnahmetopf auf, in den das Elastomerlager, die erste Membran, die zweite Membran, das zweite Elastomerlager und/oder das hydraulisch dämpfende Lager eingesetzt sind. Zur Fixierung der eingesetzten Teile kann der Aufnahmetopf bodenseitig einen umlaufenden Randabschnitt aufweisen. Zudem kann der Aufnahmetopf zur Fixierung um das Außenteil umgelegt, insbesondere umgebördelt sein. Nachfolgend werden das elastische Lager sowie weitere Merkmale und Vorteile anhand von Ausführungsbeispielen näher erläutert, die in den Figuren schematisch dargestellt sind. Hierbei zeigt:
- Fig. 1: einen Querschnitt durch ein elastisches Lager gemäß einer ersten Ausführungsform im unbelasteten Zustand;
- Fig. 2: das in Fig. 1 dargestellte elastische Lager unter statischer Vorlast;
- Fig. 3: einen Querschnitt durch ein elastisches Lager unter statischer Vorlast gemäß einer zweiten Ausführungsform;
- Fig. 4: einen Querschnitt durch ein elastisches Lager unter statischer Vorlast gemäß einer dritten Ausführungsform;
- Fig. 5: einen im Vergleich zu Fig. 4 um 90° gedrehten Querschnitt durch ein elastisches Lager unter statischer Vorlast gemäß einer vierten Ausführungsform;
- Fig. 6: einen Querschnitt durch ein elastisches Lager unter statischer Vorlast gemäß einer fünften Ausführungsform;
- Fig. 7: einen Querschnitt durch ein elastisches Lager unter statischer Vorlast gemäß einer sechsten Ausführungsform.

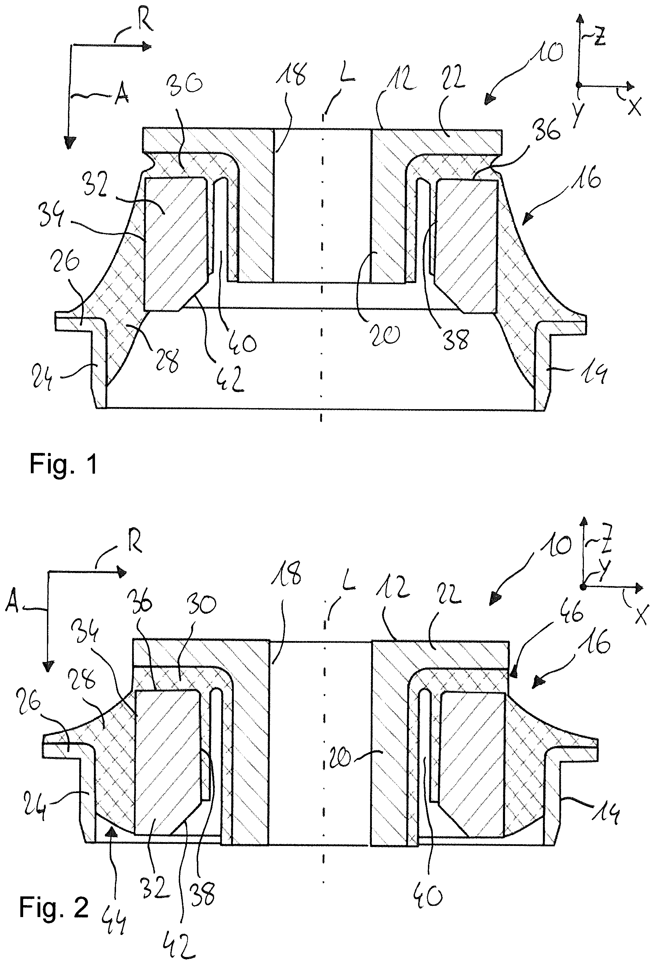

In den Figuren 1 und 2 ist ein elastisches Lager 10 gezeigt, das zur Lagerung eines nicht dargestellten Fahrzeugteils, wie beispielsweise eines Hilfsrahmens, eines Motors, eines Getriebes oder eines Fahrerhauses dient.

Das Lager 10 weist ein Innenteil 12, ein das Innenteil 12 umgebendes Außenteil 14 und ein die beiden Teile elastisch miteinander verbindendes Elastomerlager 16 auf.

Das Innenteil 12 ist aus Metall oder Kunststoff oder einem Hybridwerkstoff, wie beispielsweise einem Metall-Kunststoff-Hybrid und weist eine Durchgangsöffnung 18 auf, in die ein nicht dargestellter Bolzen zum Verbinden des Lagers 10 mit dem Fahrzeugteil hindurchführbar ist. Das Innenteil 12 ist weitgehend rotationssymmetrisch ausgebildet und weist einen in Richtung einer Längsachse L des Lagers 10 beziehungsweise in Axialrichtung A verlaufenden Axialabschnitt 20 und einen senkrecht zur Längsachse L beziehungsweise in Radialrichtung R verlaufenden Radialabschnitt 22 auf.

Das Außenteil 14 ist als dünnwandige Hülse ausgebildet, die in ein nicht dargestelltes Aufnahmeauge der Fahrzeugkarosserie einsetzbar ist. Das Außenteil 14 weist einen in Richtung der Längsachse L verlaufenden Hülsenabschnitt 24 und einen quer zur Längsachse L verlaufenden Bundabschnitt 26 auf. Das Außenteil 14 kann aus Metall oder Kunststoff sein.

Das Elastomerlager 16 weist einen ersten Elastomerkörper 28, einen zweiten Elastomerkörper 30 und ein zwischen den beiden Elastomerkörpern 28, 30 angeordnetes Zwischenelement 32 auf.

Der erste Elastomerkörper 28 ist stoffschlüssig mit dem Außenteil 14 sowie dem Zwischenelement 32 verbunden, insbesondere ist der erste Elastomerkörper 28 stoffschlüssig an eine erste Anbindungsfläche 34 des Zwischenelements 32 angebunden. Der zweite Elastomerkörper 30 ist stoffschlüssig an das Innenteil 12 und an das Zwischenelement 32 angebunden, insbesondere ist der zweite Elastomerkörper 30 an eine zweite Anbindungsfläche 36 des Zwischenelements 32 und an eine dritte Anbindungsfläche 38 des Zwischenelements 32 stoffschlüssig angebunden. Wie zudem in den Figuren 1 und 2 ersichtlich ist, ist in den zweiten Elastomerkörper 30 eine Ausnehmung 40 eingebracht.

Das Zwischenelement 32 ist ringförmig ausgebildet und kann aus Metall oder Kunststoff oder einem Metall-Kunststoff-Hybrid sein. Vorliegend ist das Zwischenelement 32 näherungsweise rechteckförmig im Querschnitt mit einer umlaufenden Schräge 42 ausgebildet. Wie in den Figuren 1 und 2 ersichtlich ist, ist die erste Anbindungsfläche 34 des Zwischenelementes 32 parallel zur Längsachse L des Lagers 10 ausgerichtet, und die zweite Anbindungsfläche 36 des Zwischenelementes 32 ist senkrecht zur Längsachse L des Lagers 10 ausgerichtet.

In Fig. 1 ist das elastische Lager 10 im nicht belasteten Zustand dargestellt. Bei dem in Fig. 2 dargestellten Zustand wirkt in Längsrichtung L eine statische Last auf das elastische Lager 10, wodurch die beiden Elastomerkörper 28, 30 komprimiert werden und in die in Fig. 2 dargestellte zweite Position überführt werden. Die in Fig. 2 dargestellte Position wird als Konstruktions- oder auch als KO-Lage bezeichnet.

In der KO-Lage nimmt der erste Elastomerkörper 28 aufgrund der zur Längsachse L parallel verlaufenden ersten Anbindungsfläche 34 sowohl weitere statische als auch dynamische Lasten in Z-Richtung auf. Dadurch wirkt der erste Elastomerkörper 28 in der KO-Lage als schubweiches Axiallager 44, während es in radialer Richtung R verhältnismäßig steif ist. Der zweite Elastomerkörper 30 ist in der K0-Lage aufgrund der senkrecht zur Längsachse L verlaufenden zweiten Anbindungsfläche 36 in X-Richtung und/oder in Y-Richtung schubweich, während es in Z-Richtung sehr steif ist. Dadurch wirkt der zweite Elastomerkörper 30 in der K0-Lage als schubweiches Radiallager 46.

Da der erste Elastomerkörper 28 im nicht belasteten Zustand eine senkrechte Anstellung aufweist, die in Fig. 1 gezeigt ist, ist die axiale Kennlinie im großen Lastbereich, insbesondere aber noch im Vorlastpunkt verhältnismäßig linear. Typische Vorlasten können dabei bis zu 5 kN betragen. Eine typische Forderung an die axialen Steifigkeiten im Vorlastpunkt liegen zwischen 400 und 800 N/m, wobei typische Einfederungen unter K0-Last zwischen 8 mm und 12 mm betragen, zu denen noch die Wege aufgrund der dynamischen Lasten hinzukommen.

In der in Fig. 2 dargestellten KO-Lage, also im eingefederten Zustand, weist das Axiallager 44 eine große radiale Überdeckung auf, so dass unter radialer Last große Druckspannungen in diesem Lager auftreten. Dadurch ist das Axiallager 44 in Radialrichtung sehr steif.

Der erste Elastomerkörper 28 weist in Richtung der Längsachse L eine Höhe und quer zu der Längsachse L eine Breite auf, wobei in der zweiten Position die Höhe größer oder gleich der Breite ist. Dadurch kann der als Axiallager 44 wirkende erste Elastomerkörper 28 hohe axiale Vorlasten bei gleichzeitig geringer, im Wesentlichen linearer Kennung aufnehmen.

Der zweite Elastomerkörper 30 weist in Richtung der Längsachse L eine Höhe und quer zur Längsachse L eine Breite auf, wobei das Verhältnis von Höhe zu Breite mindestens 1 zu 3 beträgt. Dadurch weist das Radiallager 46 eine geringe Bauhöhe auf, so dass es in Axialrichtung A sehr steif ist und hohe Lasten übertragen kann, während es in Radialrichtung R primär auf Schub belastet wird und folglich eine sehr geringe Steifigkeit in Richtung der Längsachse L aufweist.

Durch die beschriebene Geometrie des ersten Elastomerkörpers (28) und des zweiten Elastomerkörpers (30) ist die axiale Steifigkeit in der KO-Lage des zweiten Elastomerkörpers (30) wenigstens dreimal so hoch wie die axiale Steifigkeit des ersten Elastomerkörpers (28). Gleichzeitig ist die radiale Steifigkeit in X- und/oder Y-Richtung des ersten Elastomerkörpers (28) wenigstens dreimal so hoch wie die des zweiten Elastomerkörpers (30) in den korrespondierenden Richtungen.

Nachfolgend werden weitere Ausführungsformen des elastischen Lagers 10 beschrieben, wobei zu deren Beschreibung für gleiche oder funktionsgleiche Teile dieselben Bezugszeichen verwendet werden.

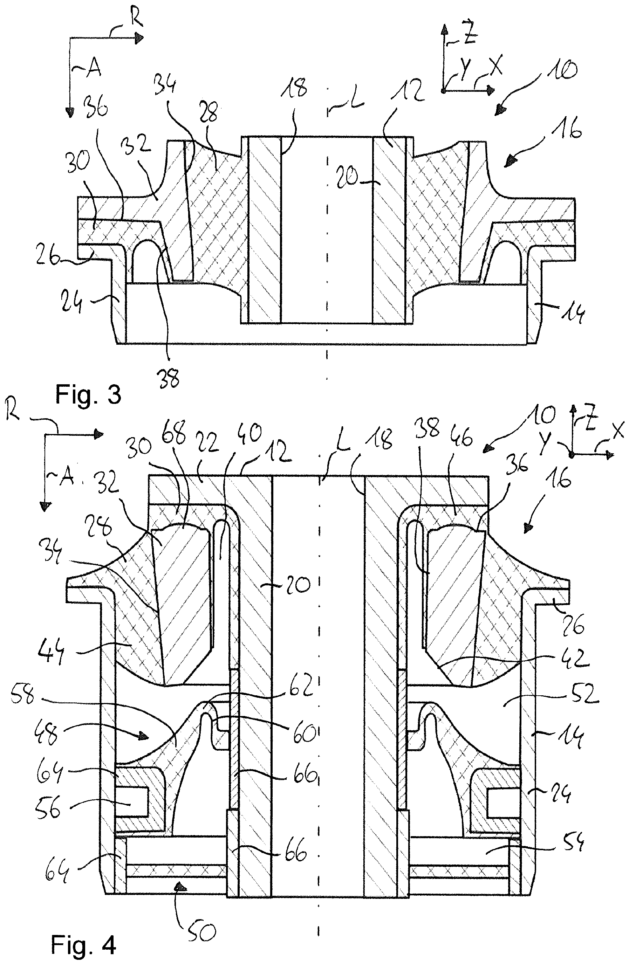

In Fig. 3 ist eine zweite Ausführungsform des elastischen Lagers 10 gezeigt, die sich von der ersten Ausführungsform in der Ausgestaltung des Innenteils 12 sowie des Zwischenelements 32 unterscheidet. Das Innenteil 12 weist nur einen Axialabschnitt 20 auf und ist somit als Hülse ausgebildet. Das Zwischenelement 32 ist im Querschnitt näherungsweise T-förmig ausgebildet, wobei die dem Innenteil 12 zugewandte Fläche des Zwischenelements 32 die erste Anbindungsfläche 34 bildet, die vorliegend zur Längsachse L geneigt ist.

Bei der in Fig. 3 dargestellten zweiten Ausführungsform des Lagers 10 ist das Axiallager 44 nah an dem Innenteil 12, und das Radiallager 46 ist nah an dem Außenteil 14 angeordnet. Auch bei der in Fig. 3 dargestellten zweiten Ausführungsform verläuft die erste Anbindungsfläche 34 des Zwischenelements 32 im Wesentlichen parallel zur Längsachse L, und die zweite Anbindungsfläche 36 des Zwischenelements 32, die der Haftfläche am Bundabschnitt 26 des Außenteils 14 gegenüberliegt, verläuft im Wesentlichen senkrecht zur Längsrichtung L.

In Fig. 4 ist eine dritte Ausführungsform des Lagers 10 dargestellt, die sich von den anderen beiden Ausführungsformen dadurch unterscheidet, dass das Lager 10 als hydraulisch dämpfendes Lager, das auch als Hydrolager bezeichnet werden kann, ausgebildet ist. Das Lager 10 weist neben dem Elastomerlager 16 eine erste Membran 48 und eine zweite Membran 50 auf, wobei das Elastomerlager 16 und die erste Membran 48 eine erste Fluidkammer 52 und die erste Membran 48 und die zweite Membran 50 eine zweite Fluidkammer 54 begrenzen. Die beiden Fluidkammern 52, 54 sind mit einem Fluid gefüllt und über einen Dämpfungskanal 56 fluidleitend miteinander verbunden. Die erste Fluidkammer 52 kann auch als Arbeitskammer und die zweite Fluidkammer 54 kann auch als Ausgleichskammer bezeichnet werden.

Die erste Membran 48 weist einen ersten Schenkel 58, einen zweiten Schenkel 60 und eine die beiden Schenkel 58, 60 miteinander verbindende Basis 62 auf. Wie in Fig. 4 ersichtlich ist, weist der radial außenliegende erste Schenkel 58 eine mittlere Dicke auf, die mindestens doppelt so dick wie die des radial innenliegenden zweiten Schenkels 60 ist. Da der erste Schenkel 58 mindestens doppelt so dick wie der zweite Schenkel 60 ist, kann die erste Membran 48 große Bewegungen in Axialrichtung A und/oder in Radialrichtung R durchführen und ist gleichzeitig sehr blähsteif bei Differenzdrücken zwischen den Fluidkammern 52, 54. Insbesondere kann sich die Basis 62 bei großen Bewegungen in Axialrichtung A und einem gleichzeitig auftretenden hohen Differenzdruck mit hohem Druck in der ersten Fluidkammer 52 und niedrigem Druck in der zweiten Fluidkammer 54 an das Innenteil 12 anlegen. Dadurch weist die erste Membran 58 eine große Blähsteifigkeit auf, was in einer verbesserten Dämpfung resultiert.

Zur Befestigung der ersten Membran 58 an dem Innenteil 12 und dem Außenteil 14 ist an dem freien Ende des ersten Schenkels 58 eine Außenhülse 64, in die der Dämpfungskanal 56 eingebracht ist, stoffschlüssig angebunden, und an das freie Ende des zweiten Schenkels 60 ist eine Innenhülse 66 stoffschlüssig angebunden. Die Innenhülse 66 wird auf das Innenteil 12 aufgeschoben, insbesondere aufgepresst, und die Außenhülse 64 wird in das Außenteil 14 eingesetzt, insbesondere eingepresst.

Die zweite Membran 50 ist als Ausgleichsmembran ausgebildet, die zur Befestigung auf dem Innenteil 12 und dem Außenteil 14 eine Innenhülse 66 und eine Außenhülse 64 aufweist, wobei die Innenhülse 66 auf das Innenteil 12 aufgeschoben, insbesondere aufgepresst, und die Außenhülse 64 in das Außenteil 14 eingesetzt, insbesondere eingepresst wird. Da die Außenhülse 64 aus einem laserabsorbierenden Kunststoff ausgeführt ist, kann sie mittels Laserdurchstrahlschweißen mit dem Außenteil 14 verschweißt werden.

Wie zudem in Fig. 4 ersichtlich ist, unterscheidet sich das Elastomerlager 16 von dem in den Figuren 1 und 2 dargestellten Elastomerlager 16 dadurch, dass die erste Anbindungsfläche 34 zur Längsachse L geneigt ist und dass die zweite Anbindungsfläche 36 eine Erhebung 68 aufweist. Die erste Anbindungsfläche 34 kann in einem Winkel von maximal +-15° zur Längsachse L des Lagers 10 geneigt sein.

Bei der Montage des in Fig. 4 dargestellten Lagers 10 werden die beiden Membranen 50, 52 derart vorgespannt montiert, dass sie in der KO-Lage wieder weitestgehend die in Fig. 4 dargestellte nicht gedehnte Gestalt einnehmen. Hierfür muss das Elastomerlager 10, insbesondere der erste Elastomerkörper (28) in der Lage sein, nahezu die gesamte Vorlast zu ertragen.

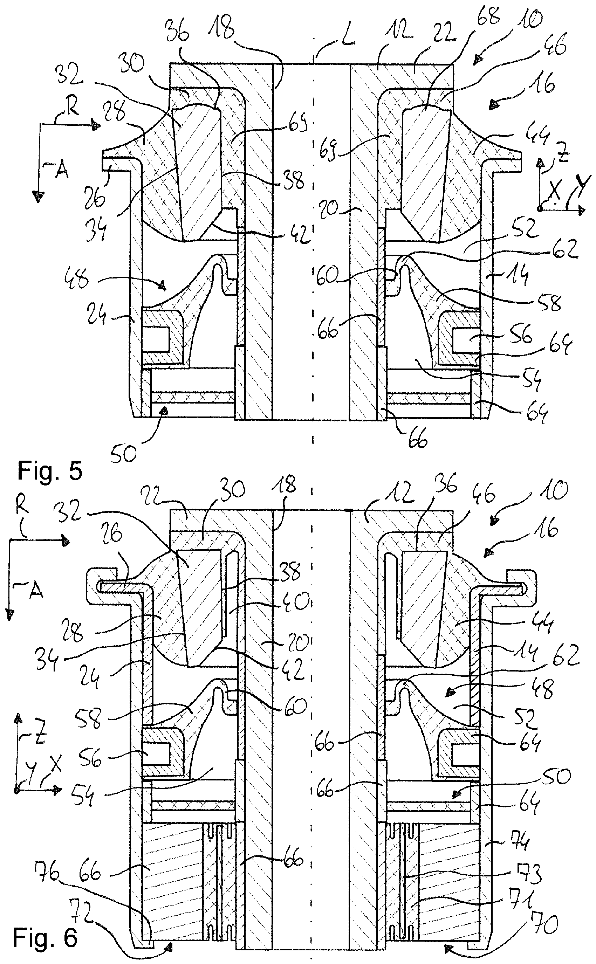

In Fig. 5 ist eine vierte Ausführungsform des Lagers gezeigt, die sich von der in Fig. 4 dargestellten Ausführungsform dadurch unterscheidet, dass der zweite Elastomerkörper 30 nicht rotationssymmetrisch ist, sondern der zweite Elastomerkörper 30 weist in einer 90° zur Fig. 4 gezeigten Schnittebene keine Ausnehmung 40 auf. Somit ist das Elastomerlager 16 nicht rotationssymmetrisch und im wesentlichen flach, sondern der zweite Elastomerkörper 30 wird in Radialrichtung R in den senkrechten Spalt fortgeführt und bildet ein Elastomerpolster 69 aus, das in X-Richtung und/oder Y-Richtung wirkt. Dadurch kann die Spreizung der radialen Kennungen erhöht werden.

In Fig. 6 ist eine fünfte Ausführungsform des Lagers 10 gezeigt, die sich von der dritten und vierten Ausführungsform dadurch unterscheidet, dass ein zweites Elastomerlager 70 endseitig angeordnet ist, das als zweites Radiallager 72 wirkt.

Das zweite Radiallager 72 weist eine Innenhülse 66, eine Außenhülse 64, einen Elastomerelement 71 und in den Elastomerelement 71 eingebrachtes Zwischenbleche 73 auf. Das zweite Radiallager 72 weist bevorzugt eine hohe Kennungsspreizung auf.

Vorteilhaft an dieser Ausführungsform ist, dass die radialen Steifigkeiten des Elastomerlagers 16 und die des zweiten Radiallagers 72 parallel geschaltet sind.

Dadurch bestimmt die radiale Steifigkeit des Axiallagers 44 nicht länger die Radialsteifigkeit der Gesamtkonstruktion.

Wie in Fig. 6 ersichtlich ist, sind das Elastomerlager 16, die erste Membran 48, die zweite Membran 50 und das zweite Elastomerlager 70 in einen Aufnahmetopf 74 eingesetzt. Zur Festlegung des Elastomerlagers 16, der ersten Membran 48, der zweiten Membran 50 und des zweiten Elastomerlagers 70 innerhalb des Aufnahmetopfs 74 weist der Aufnahmetopf 74 bodenseitig einen umlaufenden Randabschnitt 76 auf. Zusätzlich ist der Aufnahmetopf 74 um den Bundabschnitt 26 umgelegt, insbesondere umgebördelt.

Die in Fig. 6 dargestellte Konstruktion vereinfacht die Vulkanisation beziehungsweise ermöglicht eine robuste Vulkanisationswerkzeugkonstruktion, da der Hülsenabschnitt 24 kürzer als in der Ausführungsform aus Fig. 4 und 5 ausgeführt werden kann und damit nicht so tief in das Vulkanisationswerkzeug eintauchen muss. Außerdem ist es so möglich, einen tiefgezogenen Aufnahmetopf zu verwenden, bei dem der Boden ausgestanzt wird, um den umlaufenden Randabschnitt 76 zur Fixierung der von oben eingesetzten Teile herzustellen.

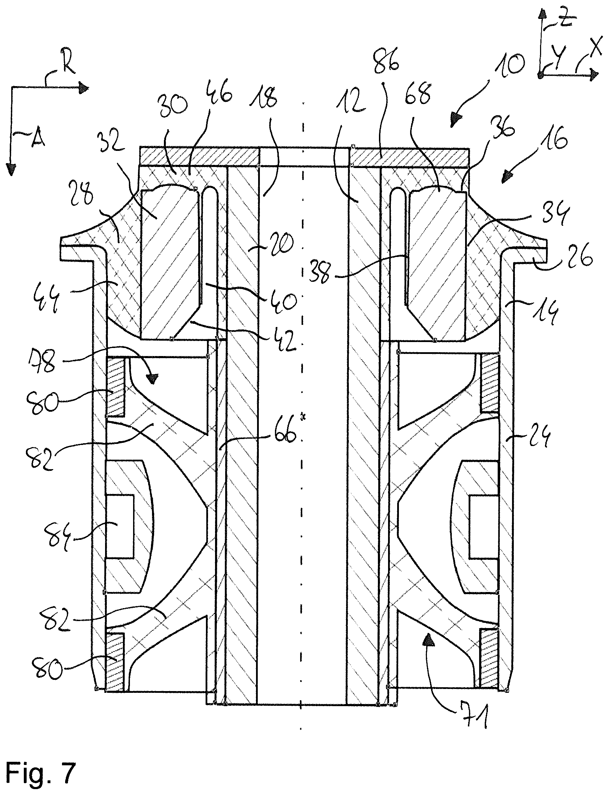

In Fig. 7 ist eine sechste Ausführungsform des elastischen Lagers 10 gezeigt, das sich von den anderen Ausführungsformen dadurch unterscheidet, dass ein radial dämpfendes Hydrolager 78 integriert ist.

Das Hydrolager 78 weist eine Innenhülse 66, mittels derer das Hydrolager 78 auf das Innenteil 12 aufschiebbar, insbesondere aufpressbar ist, ein Elastomerelement 71 und ein käfigförmiges Befestigungselement 80 oder zwei im wesentlichen ringförmige Befestigungselemente 80, mittels denen das Hydrolager 78 in das Außenteil 14 einsetzbar, insbesondere einpressbar ist, auf.

Das Elastomerelement 71 ist stoffschlüssig an die Innenhülse 66 und die beiden hülsenförmigen Befestigungselemente 80 angebunden, wobei das Elastomerelement 71 zwei Elastomermembranen 82 aufweist, die die mit einem Fluid gefüllte Fluidkammern 52, 54 begrenzen. Die Fluidkammern 52, 54 sind über einen Kanal 84 miteinander verbunden, der vorliegend ein separates Teil ist und in das Außenteil 14 eingesetzt, insbesondere eingepresst ist.

Wie zudem in Figur 7 ersichtlich ist, wird der Radialabschnitt 22 durch eine separate Platte 86 gebildet, die form- und/oder stoffschlüssig mit dem Innenteil verbunden ist und/oder nach der Montage kraftschlüssig zwischen Innenteil 20 und der nicht dargestellten Fahrzeuganbindung eingeklemmt ist. An die Platte 86 wir dann das Radiallager 36 anvulkanisiert. Darüber hinaus weist das in Fig. 7 dargestellte Zwischenelement 32 eine Erhebung 68 auf.

Das Lager 10 zeichnet sich durch das Zwischenelement 32 aus, welches das Elastomerlager 16 in zwei Elastomerkörper 28, 30 aufteilt, nämlich, ein in Z-Richtung schubweich wirkendes Axiallager 44 und ein in X-Richtung und/oder in Y-Richtung schubweich wirkendes Radiallager 46. Dadurch kann das elastische Lager 10 die Radialrichtung R von der Axialrichtung A entkoppeln. Das Axiallager 44 weist in KO-Lage ein in Axialrichtung A ausgerichtetes Schubpolster auf, welches unabhängig vom Einfederzustand eine verhältnismäßig wenig progressive Kennlinie aufweist. Das Radiallager 46 ist radial sehr schubweich und gleichzeitig aber axial sehr steif. Dadurch kann das Radiallager 46 die Axiallasten auf das Axiallager 44 übertragen, ohne dass die Beanspruchung seines Elastomers sehr hoch ist. Durch das Einfügen des Zwischenelementes 32 kann somit eine radial weiche Lagerung mit einer schubweichen, linearen Lagerung in Axialrichtung A für hohe Vorlasten kombiniert werden. Zudem kann das radial weiche Axiallagerpaket bestehend aus dem ersten Elastomerkörper 28, dem zweiten 30 Elastomerkörper und dem Zwischenelement 32 auch als Arbeitsmembran in einem hydraulisch dämpfenden Lager, insbesondere in einem axial dämpfenden Hydrolager verwendet werden. Darüber hinaus erhöht das Zwischenelement 32 die Blähsteifigkeit des Elastomerpolsters auch unter hohen axialen Einfederwegen und ermöglicht damit eine große Pumpleistung.

Durch die Ausgestaltung des Zwischenelements 32 und der beidseitig angeordneten Elastomerkörper 28, 30 ist eine besonders modular einstellbare Kennungsspreizung möglich, nämlich eine über einen weiten Lastbereich nahezu lineare, weiche Kennung in Z-Richtung, welche besonders hohe Lasten und damit Auslenkungen in Z-Richtungen erträgt, in Kombination mit einer geringen radialen Steifigkeit in Y- und in X-Richtung. Dies wird insbesondere durch die Ausrichtung beziehungsweise den Verlauf der Anbindungsflächen 34, 36 zur Längsachse L des Lagers 10 erzielt. Durch die Bereitstellung der zu der Längsachse L des Lagers 10 verlaufenden Anbindungsflächen 34, 36 an dem Zwischenelement 32 können zwei Lager in Reihe geschaltet werden, wobei jeweils die geringste in Reihe geschaltete Steifigkeit die Gesamtsteifigkeit dominiert. So kann eine sehr hohe axiale Steifigkeit mit einem axial weichen Lager linearer Kennung über einen hohen Lastbereich zu einem besonders lebensdauerfesten Lager mit linearem Lagerverhalten kombiniert werden, während eine besonders weiche radiale Steifigkeit gepaart mit einer hohen radialen Steifigkeit zu einer geringen radialen Gesamtsteifigkeit führt.

Das elastische Lager 10 kann überall dort eingesetzt werden, wo hohe axiale Lasten auftreten und gleichzeitig ein möglichst linearer Steifigkeitsverlauf, wie auch eine geringe radiale Steifigkeit unter Last für hohen Fahrkomfort gefordert werden. So kann das elastische Lager 10 beispielsweise als Hinterachsträgerlager oder Body Mount, Aggregatelager, wie Motorlager oder Kühlerlager oder als Fahrerhauslager in Personen- oder Lastkraftwagen eingesetzt werden.

### Bezugszeichenliste

- 10: elastisches Lager
- 12: Innenteil
- 14: Außenteil
- 16: Elastomerlager
- 18: Durchgangsöffnung
- 20: Axialabschnitt
- 22: Radialabschnitt
- 24: Hülsenabschnitt
- 26: Bundabschnitt
- 28: erster Elastomerkörper
- 30: zweiter Elastomerkörper
- 32: Zwischenelement
- 34: erste Anbindungsfläche
- 36: zweite Anbindungsfläche
- 38: dritte Anbindungsfläche
- 40: Ausnehmung
- 42: Schräge
- 44: Axiallager
- 46: Radiallager
- 48: erste Membran
- 50: zweite Membran
- 52: erste Fluidkammer
- 54: zweite Fluidkammer
- 56: Dämpfungskanal
- 58: erster Schenkel
- 60: zweiter Schenkel
- 62: Basis
- 64: Außenhülse
- 66: Innenhülse
- 68: Erhebung
- 69: Elastomerpolster
- 70: zweites Elastomerlager
- 71: Elastomerelement
- 72: zweites Radiallager
- 73: Zwischenblech
- 74: Aufnahmetopf
- 76: umlaufender Randabschnitt
- 78: radial dämpfendes Hydrolager
- 80: ringförmiges Befestigungselement
- 82: Elastomermembran
- 84: Kanal
- 86: Platte

- L: Längsachse
- A: Axialrichtung
- R: Radialrichtung

- X: X-Richtung
- Y: Y-Richtung
- Z: Z-Richtung

## Patentansprüche

1. Elastisches Lager (10) zur Aufnahme statischer und dynamischer Lasten eines Fahrzeugteils, aufweisend ein Innenteil (12), an dem das Fahrzeugteil festlegbar ist, ein Außenteil (14), das in ein Aufnahmeauge einsetzbar oder an einer Fahrzeugstruktur festlegbar ist, und wenigstens ein Elastomerlager (16), das das Innenteil (12) und das Außenteil (14) elastisch miteinander verbindet, wobei das Elastomerlager (16) bei Aufnahme einer in Richtung der Längsachse (L) des Lagers (10) wirkenden statischen Last von einer ersten Position in eine zweite Position überführbar ist, wobei das Elastomerlager (16) einen ersten Elastomerkörper (28), einen zweiten Elastomerkörper (30) und ein Zwischenelement (32) aufweist, das zwischen den beiden Elastomerkörpern (28, 30) angeordnet ist und an das die Elastomerkörper (28, 30) stoffschlüssig angebunden sind, wobei das Zwischenelement (32) wenigstens eine erste Anbindungsfläche (34) für den ersten Elastomerkörper (28) und wenigstens eine zweite Anbindungsfläche (36) für den zweiten Elastomerkörper (30) aufweist, **dadurch gekennzeichnet, dass** die erste Anbindungsfläche (34) derart zur Längsachse (L) des Elastomerlagers (16) ausgerichtet ist, dass der erste Elastomerkörper (28) in der zweiten Position zur Aufnahme der Lasten in Z-Richtung schubweich, in X-Richtung und/oder in Y-Richtung steif ausgebildet ist, und wobei die zweite Anbindungsfläche (36) derart zur Längsachse (L) des Elastomerlagers (16) ausgerichtet ist, dass der zweite Elastomerkörper (30) in der zweiten Position zur Aufnahme der Lasten in X-Richtung und/oder in Y-Richtung schubweich und in Z-Richtung steif ausgebildet ist.

2. Elastisches Lager (10) nach Anspruch 1, **dadurch gekennzeichnet, dass** die erste Anbindungsfläche (34) parallel zur Längsachse (L) des Lagers (10) oder in einem Winkel von maximal +-15° zur Längsachse (L) des Lagers (10) ausgerichtet ist.

3. Elastisches Lager (10) nach Anspruch 1 oder 2, **dadurch gekennzeichnet, dass** die zweite Anbindungsfläche (36) senkrecht zur Längsachse (L) des Lagers (10) oder in einem Winkel von maximal +-10° zu einer senkrecht auf der Längsachse (L) stehenden Achse ausgerichtet ist.

4. Elastisches Lager (10) nach einem der vorhergehenden Ansprüche, **dadurch gekennzeichnet, dass** die erste Anbindungsfläche (34) und/oder die zweite Anbindungsfläche (36) wenigstens eine Vertiefung und/oder wenigstens eine Erhebung (68) aufweist.

5. Elastisches Lager (10) nach einem der vorhergehenden Ansprüche, **dadurch gekennzeichnet, dass** der zweite Elastomerkörper (30) in Richtung der Längsachse (L) eine Höhe und quer zur Längsachse (L) eine Breite aufweist, wobei das Verhältnis von Höhe zu Breite mindestens 1 zu 3 beträgt.

6. Elastisches Lager (10) nach einem der vorhergehenden Ansprüche, **dadurch gekennzeichnet, dass** der erste Elastomerkörper (28) in Richtung der Längsachse (L) eine Höhe und quer zu der Längsachse (L) eine Breite aufweist, wobei in der zweiten Position die Höhe größer oder gleich der Breite ist.

7. Elastisches Lager (10) nach einem der vorhergehenden Ansprüche, **dadurch gekennzeichnet, dass** der erste Elastomerkörper (28) und/oder der zweite Elastomerkörper (30) wenigstens ein Elastomerpolster (69) aufweist, das in X- Richtung und/oder Y-Richtung wirkt.

8. Elastisches Lager (10) nach einem der vorhergehenden Ansprüche, **dadurch gekennzeichnet, dass** das Zwischenelement (32) ringförmig ist.

9. Elastisches Lager (10) nach einem der vorhergehenden Ansprüche, **dadurch gekennzeichnet, dass** das Zwischenelement (32) im Querschnitt rechteckförmig, L-förmig oder T-förmig ist.

10. Elastisches Lager (10) nach einem der vorhergehenden Ansprüche, **dadurch gekennzeichnet, dass** eine erste Membran (48) und eine zweite Membran (50) vorgesehen ist, wobei das Elastomerlager (16) und die erste Membran (48) eine erste Fluidkammer (52) und die erste Membran (48) und die zweite Membran (50) eine zweite Fluidkammer (54) begrenzen, und wobei die Fluidkammern (52, 54) mit einem Fluid gefüllt und über einen Dämpfungskanal (56) fluidleitend miteinander verbunden sind.

11. Elastisches Lager (10) nach Anspruch 10, **dadurch gekennzeichnet, dass** die erste Membran (48) einen ersten Schenkel (58), einen zweiten Schenkel (58, 60) und eine die beiden Schenkel (58, 60) miteinander verbindende Basis (62) aufweist, wobei eine mittlere Dicke eines der Schenkel (58; 60) mindestens doppelt so dick wie die des anderen Schenkels (60; 58) ist.

12. Elastisches Lager (10) nach Anspruch 10 oder 11, **dadurch gekennzeichnet, dass** ein zweites Elastomerlager (70) vorgesehen ist, das in X-Richtung und/oder Y-Richtung wirkt.

13. Elastisches Lager (10) nach einem der Ansprüche 1 bis 9, **dadurch gekennzeichnet, dass** ein hydraulisch dämpfendes Lager integriert ist.

## Claims

1. Elastic bearing (10) for absorbing static and dynamic loads of a vehicle part, comprising an inner part (12) to which the vehicle part is fixable, an outer part (14) being insertable into a receiving orifice or being fixable to a vehicle structure, and at least one elastomer bearing (16) which elastically connects the inner part (12) and the outer part (14) to one another, wherein the elastomeric bearing (16) can be transferred from a first position into a second position when absorbing a static load acting in the direction of the longitudinal axis (L) of the bearing (10), wherein the elastomeric bearing (16) comprises a first elastomeric body (28), a second elastomeric body (30) and an intermediate element (32) being arranged between the two elastomeric bodies (28, 30) and to which the elastomeric bodies (28, 30) are attached in a materially bonded manner, the intermediate element (32) having at least one first bonding surface (34) for the first elastomer body (28) and at least one second bonding surface (36) for the second elastomer body (30), **characterized in that** the first bonding surface (34) is aligned to the longitudinal axis (L) of the elastomer bearing (16) such that, in the second position, the first elastomer body (28) is configured to be shear-soft in the Z-direction, stiff in the X-direction and/or in the Y-direction for receiving the loads, and the second bonding surface (36) being aligned to the longitudinal axis (L) of the elastomeric bearing (16) such that, in the second position, the second elastomer body (30) is configured to be shear-soft in the X-direction and/or in the Y-direction and stiff in the Z-direction for receiving the loads.

2. Elastic bearing (10) according to claim 1, **characterized in that** the first bonding surface (34) is oriented parallel to the longitudinal axis (L) of the bearing (10) or at an angle of at most +-15° to the longitudinal axis (L) of the bearing (10).

3. Elastic bearing (10) according to claim 1 or 2, **characterized in that** the second bonding surface (36) is oriented perpendicular to the longitudinal axis (L) of the bearing (10) or at an angle of at most +-10° to an axis perpendicular to the longitudinal axis (L).

4. Elastic bearing (10) according to any one of the preceding claims, **characterized in that** the first bonding surface (34) and/or the second bonding surface (36) comprises at least one recess and/or at least one elevation (68).

5. Elastic bearing (10) according to any one of the preceding claims, **characterized in that** the second elastomeric body (30) has a height in the direction of the longitudinal axis (L) and a width transversely to the longitudinal axis (L), the ratio of height to width being at least 1 to 3.

6. Elastic bearing (10) according to any one of the preceding claims, **characterized in that** said first elastomeric body (28) has a height in the direction of said longitudinal axis (L) and a width transverse to said longitudinal axis (L), wherein in said second position said height is greater than or equal to said width.

7. Elastic bearing (10) according to one of the preceding claims, **characterized in that** the first elastomer body (28) and/or the second elastomer body (30) comprises at least one elastomer pad (69) acting in the X-direction and/or Y-direction.

8. Elastic bearing (10) according to any one of the preceding claims, **characterized in that** the intermediate element (32) is annular.

9. Elastic bearing (10) according to any one of the preceding claims, **characterized in that** the intermediate element (32) is rectangular, L-shaped or T-shaped in crosssection.

10. Elastic bearing (10) according to any one of the preceding claims, **characterized in that** a first diaphragm (48) and a second diaphragm (50) are provided, wherein the elastomeric bearing (16) and the first diaphragm (48) delimit a first fluid chamber (52) and the first diaphragm (48) and the second diaphragm (50) delimit a second fluid chamber (54), and wherein the fluid chambers (52, 54) are filled with a fluid and are fluidly connected to each other via a damping channel (56).

11. Elastic bearing (10) of claim 10, **characterized in that** the first diaphragm (48) comprises a first leg (58), a second leg (58, 60), and a base (62) interconnecting the two legs (58, 60), wherein an average thickness of one of the legs (58, 60) is at least twice that of the other leg (60, 58).

12. Elastic bearing (10) according to claim 10 or 11, **characterized in that** a second elastomeric bearing (70) is provided which acts in the X-direction and/or Y-direction.

13. Elastic bearing (10) according to any one of claims 1 to 9, **characterized in that** a hydraulically damping bearing is integrated.

## Revendications

1. Palier élastique (10) pour recevoir des charges statiques et dynamiques d'une partie de véhicule, présentant une partie intérieure (12) sur laquelle la partie de véhicule peut être fixée, une partie extérieure (14) qui peut être insérée dans un orifice de réception ou qui peut être fixée sur une structure de véhicule, et au moins un palier élastomère (16) qui relie de manière élastique la partie intérieure (12) et la partie extérieure (14), le palier élastomère (16) pouvant passer d'une première position à une deuxième position lorsqu'il reçoit une charge statique agissant dans la direction de l'axe longitudinal (L) du palier (10), le palier élastomère (16) présentant un premier corps élastomère (28), un deuxième corps élastomère (30) et un élément intermédiaire (32) qui est disposé entre les deux corps élastomères (28, 30) et auquel les corps élastomères (28, 30) sont reliés par une liaison de matière, l'élément intermédiaire (32) présentant au moins une première surface de liaison (34) pour le premier corps élastomère (28) et au moins une deuxième surface de liaison (36) pour le deuxième corps élastomère (30), **caractérisé en ce que** la première surface de liaison (34) est orientée de telle sorte par rapport à l'axe longitudinal (L) du palier élastomère (16), **en ce que** le premier corps élastomère (28), dans la deuxième position, est souple en poussant dans la direction Z, rigide dans la direction X et/ou dans la direction Y pour recevoir les charges, et la deuxième surface de liaison (36) étant orientée par rapport à l'axe longitudinal (L) du palier élastomère (16) de telle sorte que le deuxième corps élastomère (30), dans la deuxième position, est souple en poussant et rigide dans la direction Z pour recevoir les charges dans la direction X et/ou dans la direction Y.

2. Palier élastique (10) selon la revendication 1, **caractérisé en ce que** la première surface de liaison (34) est orientée parallèlement à l'axe longitudinal (L) du palier (10) ou selon un angle maximal de +-15° par rapport à l'axe longitudinal (L) du palier (10).

3. Palier élastique (10) selon la revendication 1 ou 2, **caractérisé en ce que** la deuxième surface de liaison (36) est orientée perpendiculairement à l'axe longitudinal (L) du palier (10) ou selon un angle de +-10° maximum par rapport à un axe perpendiculaire à l'axe longitudinal (L).

4. Palier élastique (10) selon l'une quelconque des revendications précédentes, **caractérisé en ce que** la première surface de liaison (34) et/ou la deuxième surface de liaison (36) présente au moins un creux et/ou au moins une bosse (68).

5. Palier élastique (10) selon l'une quelconque des revendications précédentes, **caractérisé en ce que** le deuxième corps élastomère (30) présente une hauteur dans la direction de l'axe longitudinal (L) et une largeur transversalement à l'axe longitudinal (L), le rapport entre la hauteur et la largeur étant d'au moins 1 à 3.

6. Palier élastique (10) selon l'une quelconque des revendications précédentes, **caractérisé en ce que** le premier corps élastomère (28) présente une hauteur dans la direction de l'axe longitudinal (L) et une largeur transversalement à l'axe longitudinal (L), la hauteur étant supérieure ou égale à la largeur dans la deuxième position.

7. Palier élastique (10) selon l'une quelconque des revendications précédentes, **caractérisé en ce que** le premier corps élastomère (28) et/ou le deuxième corps élastomère (30) comporte au moins un coussinet élastomère (69) agissant dans la direction X et/ou dans la direction Y.

8. Palier élastique (10) selon l'une quelconque des revendications précédentes, **caractérisé en ce que** l'élément intermédiaire (32) est annulaire.

9. Palier élastique (10) selon l'une des revendications précédentes, **caractérisé en ce que** l'élément intermédiaire (32) a une section transversale rectangulaire, en forme de L ou de T.

10. Palier élastique (10) selon l'une des revendications précédentes, **caractérisé en ce qu'**il est prévu une première membrane (48) et une deuxième membrane (50), le palier élastomère (16) et la première membrane (48) délimitant une première chambre à fluide (52) et la première membrane (48) et la deuxième membrane (50) délimitant une deuxième chambre à fluide (54), les chambres à fluide (52, 54) étant remplies d'un fluide et reliées entre elles par un canal d'amortissement (56) de manière à conduire le fluide.

11. Palier élastique (10) selon la revendication 10, **caractérisé en ce que** la première membrane (48) comprend une première branche (58), une deuxième branche (58, 60) et une base (62) reliant les deux branches (58, 60), une épaisseur moyenne de l'une des branches (58, 60) étant au moins deux fois plus épaisse que celle de l'autre branche (60, 58).

12. Palier élastique (10) selon la revendication 10 ou 11, **caractérisé en ce qu'**il est prévu un deuxième palier élastomère (70) qui agit dans la direction X et/ou dans la direction Y.

13. Palier élastique (10) selon l'une des revendications 1 à 9, **caractérisé en ce qu'**il intègre un palier à amortissement hydraulique.
